# EUROPÄISCHE PATENTANMELDUNG

(11) **EP 2 815 867 A1**
(43) Veröffentlichungstag der Anmeldung: **24.12.2014**
(21) Anmeldenummer: 14173500.1
(22) Anmeldetag: 23.06.2014
(51) Int. Cl.: B29C 49/48, B29C 49/06

(54) **Haltering für eine Blasform zum Arretieren und Fixieren eines Kunststoffvorformlings**

(30) Priorität: 21.06.2013 DE 102013106481
(71) Anmelder: Krones AG, 93073 Neutraubling (DE)
(72) Erfinder: Schuster, Gerhard, 93073 Neutraubling (DE)
(74) Vertreter: Hannke, Christian

(57) **Zusammenfassung**

Die Erfindung betrifft einen Haltering (1) für eine Blasform zum Arretieren und Fixieren eines Kunststoffvorformlings (100), mit einer Abstützfläche (2) zum Abstützen eines Kragens (3) des Kunststoffvorformlings (100) und einer sich senkrecht zu einer Haupterstreckungsebene der Abstützfläche (2) erstreckende Aufnahmekavität (4) zum Aufnehmen eines Halsbereichs (5) des Kunststoffvorformlings (100), wobei die Aufnahmekavität (4) sich in ihrer Querschnittsfläche entlang einer Längsrichtung (L) des Kunststoffvorformlings (100) ausgehend von der Abstützfläche (2) radial nach außen hin zumindest stellenweise konisch verbreitert.

## Beschreibung

Die vorliegende Erfindung betrifft einen Haltering für eine Blasform zum Arretieren und/oder Fixieren eines Kunststoffvorformlings mit einer Abstützfläche zum Abstützen eines Kragens des Kunststoffvorformlings und einer sich senkrecht zu einer Haupterstreckungsebene der Abstützfläche erstreckenden Aufnahmekavität zum Aufnehmen eines Halsbereichs des Kunststoffvorformlings, gemäß dem Oberbegriff des Patentanspruchs 1. Darüber hinaus betrifft die vorliegende Erfindung eine Blasform zur Herstellung von Kunststoffbehältnissen gemäß dem Oberbegriff des Patentanspruchs 7.

Insbesondere im Bereich der Getränkeindustrie werden bereits seit längerer Zeit neben Glasflaschen auch Kunststoffflaschen für die abzufüllenden Getränke verwendet. Bei der Herstellung dieser Kunststoffflaschen ist es bekannt, einen Kunststoffrohling zu erwärmen, in eine Blasform zu geben und dann auf seine Endgröße aufzublasen. Dazu werden üblicherweise Blasformen verwendet, die umfänglich um den aufzublasenden Rohling geschlossen und dann durch ihre Öffnung mit Druckluft beschickt werden.

Dabei ist das Mundstück der zukünftigen Flasche bereits bei dem Rohling fertiggestellt und wird vorzugsweise nicht weiter behandelt. Für den eigentlichen Blasvorgang liegt ein Umfangsrand oder Kragen des Rohlings auf einem Umfangsrand der Blasform auf, sodass verhindert wird, dass der Rohling in das Innere der Blasform fällt.

Mit anderen Worten liegt, sobald eine derartige Blasform geschlossen ist, der Rohling, das heißt die sogenannte Preform, direkt vor dem Streckblasvorgang auf der Abstützfläche des Halterings auf.

Beim Umformen des Kunststoffvorformlings (Preform) zur Flasche spielen insbesondere zwei Bereiche des Kunststoffvorformlings während des Blasvorgangs eine entscheidende Rolle. Zum einen ist ein erster Bereich oberhalb des Tragrings wesentlich, da dieser Bereich sich nach Möglichkeit nicht oder kaum verändern darf. Zum anderen ist ein zweiter Bereich unterhalb des Halterings zu definieren, welcher sich ausgehend von einer "reagenzglasförmigen" Körperform des Kunststoffvorformlings hin zur Flaschenform umbilden muss. Beim Blasprozess wird eine Innenfläche des Kunststoffvorformlings um ein Vielfaches, beispielsweise um ein Zwanzigfaches, vergrößert. Gleichzeitig verringert sich eine Wandstärke entsprechend, beispielsweise um den gleichen Faktor. Dieses geschieht jedoch nicht an allen Stellen des Kunststoffvorformlings gleich stark. Der Bereich direkt unter des Halterings, das heißt unterhalb des Kragens, erfährt diese Belastungen auf kürzester Strecke. An diesem Übergangsbereich kann es zu einer nur schwer kontrollierbaren Formabbildung kommen, der einen Flaschenhalsanfang, beispielsweise zum Teil im Durchmesser, vergrößert (Relax-Prozess ohne Halsplattenkühlung) oder verkleinert (normaler Rückschrumpf sowie ggf. weitere Komponenten).

Halteringe aus dem Stand der Technik für eine Blasform, welche beispielsweise während eines Blasformprozesses zur Anwendung kommen, weisen jedoch den Nachteil auf, dass ein Halsanfangsbereich direkt unterhalb des Kragens des Kunststoffvorformlings sich beispielsweise von dem Kragen weg in Richtung einer Längsachse des Kunststoffvorformlings unerwünscht verändert und beispielsweise unerwünschte Materialdickstellen entstehen können, wodurch zur Verfügung stehende Neckhandlingsysteme die Kunststoffformlinge oder daraus entstandene Behältnisse nicht sicher transportieren können. Darüber hinaus kann sich ein unerwünschtes höheres Gewicht des Kunststoffformlings ergeben.

Der vorliegenden Erfindung liegt daher die Aufgabe zugrunde, die Gefahr unerwünschter Materialdickstellen im Halsbereich eines Kunststoffvorformlings auszuschließen oder zumindest zu verringern und gleichzeitig ein Handling der Kunststoffformlinge während und nach dem Blasen zu verbessern.

Dieses wird erfindungsgemäß durch einen Haltering für eine Blasform zum Arretieren und Fixieren eines Kunststoffvorformlings gemäß dem Anspruch 1 sowie durch eine Blasform zur Herstellung von Kunststoffbehältnissen gemäß des Patentanspruchs 7 erreicht.

Um nun einen Haltering für eine Blasform zum Arretieren und/oder Fixieren eines Kunststoffvorformlings anzugeben, durch welchen zum einen unerwünschte Materialdickstellen innerhalb eines Halsbereichs unterhalb eines Kragens des Kunststoffvorformlings vermieden werden und durch welchen Kunststoffformlinge besonders sicher handhabbar sind, macht die vorliegende Erfindung unter anderem von der Idee Gebrauch, dass die Aufnahmekavität sich in ihrer Querschnittsfläche entlang einer Längsrichtung des Kunststoffvorformlings ausgehend von der Abstützfläche radial nach außen hin zumindest stellenweise konisch verbreitert.

Über die konische Verbreiterung ist sichergestellt, dass insbesondere eine sich nach und/oder während dem/s Ausformen/s abkühlende Flasche im Halsbereich zwar beispielsweise an einem unteren Ende des Halsbereichs stärker zusammenzieht als an einem oberen Ende, jedoch derart unterschiedliche Abkühleigenschaften schlechtestenfalls dazu führen, dass ein derartiger Halsbereich zylindrisch ausgebildet ist. Im Idealfall jedoch ist mittels der "konisch" ausgebildeten Aufnahmekavität gewährleistet, dass die aus dem Kunststoffvorformling hergestellte Flasche auch nach dem Abkühlen in ihrem Querschnitt immer noch durch den Haltering aufgrund des konisch nach außen verlaufenden Flaschenhalses stabiler und besser handhabbar ist, da Berührungspunkte des Halterings in Verbindung mit dem konischen sich nach außen verbreiternden Flaschenhals zu einem Ausweichen der Flasche in Längsrichtung nach unten führt, wodurch mittels einer derartig "konischen" Ausbildung des Flaschenhalses der Kunststoffvorformling und/oder die Flasche automatisch in die Blasform oder eine sonstige Halteeinrichtung hineingepresst wird.

Darüber hinaus ermöglicht eine derartig konische Ausbildung der Aufnahmekavität, beispielsweise an einer Blasform, eine Erweiterung eines Prozessfensters beispielsweise in zeitlicher Hinsicht, beim Bilden einer Flasche in der Weise, dass während des Blasvorgangs mehr Material aus dem Hals gezogen werden kann. Darüber hinaus wird durch dieses "erleichterte Ausziehen" des Kunststoffvorformlings, welcher beispielsweise mit einem PET-Material gebildet ist, im Halsbereich eine Verbesserung beim Befüllen, das heißt eine Erleichterung und eine Prozesszeitverkürzung, ermöglicht.

Gemäß zumindest einer Ausführungsform umfasst der Haltering für eine Blasform zum Arretieren und Fixieren eines Kunststoffvorformlings eine Abstützfläche zum Abstützen eines Kragens des Kunststoffvorformlings und eine sich senkrecht zu einer Haupterstreckungsebene der Abstützfläche erstreckende Aufnahmekavität zum Aufnehmen des Halsbereichs des Kunststoffvorformlings. Dabei ist die Aufnahmekavität in ihrer Querschnittsfläche entlang einer Längsrichtung des Kunststoffvorformlings ausgehend von der Abstützfläche radial nach außen hin zumindest stellenweise konisch verbreitert. Insbesondere ist denkbar, dass die Abstützfläche radial nach außen hin sich vollständig und durchgehend konisch verbreitert. Insofern kann die Abstützfläche in Form eines gedachten Kegelstumpfes mit einem sich nach außen hin verbreiternden Querschnitt interpretiert werden.

Gemäß zumindest einer Ausführungsform beträgt eine Neigung einer Innenfläche der Aufnahmekavität zu der Längsrichtung wenigstens 0,5° und höchstens 10°, bevorzugt wenigstens 1 °und höchstens 6°, und besonders bevorzugt wenigstens 1 ° und höchstens 3°. Überraschenderweise wurde die Erkenntnis gewonnen, dass mittels eines derart engen geringgradigen Abweichens von der Längsrichtung zum einen gewährleistet ist, dass der Kunststoffvorformling weder unerwünschte Materialdickstellen aufweist noch schwierig zu handhaben ist und darüber hinaus die Neigung der Innenfläche gegen die Längsrichtung nicht derart groß ist, dass der Flaschenhals sich zu schnell verbreitert oder ein Handling des Halterings unnötig erschwert wäre.

Gemäß zumindest einer Ausführungsform ist eine Projektion einer Ausdehnung einer Innenfläche der Aufnahmekavität auf die Längsrichtung höchstens 10 mm, bevorzugt höchstens 8 mm, besonders bevorzugt höchstens 6 mm. "Projektion" heißt in diesem Zusammenhang eine mathematisch gedachte Abbildung der Innenfläche der Aufnahmekavität in einer Richtung senkrecht zur Längsrichtung des Kunststoffvorformlings auf die Längsrichtung. Es hat sich nämlich gezeigt, dass eine derartige Breitenbegrenzung des Halterings in der Längsrichtung bereits vollkommen ausreichend ist, um die gewünschten Effekte, insbesondere in Bezug auf ein erleichtertes Neckhandling sowie auf die Vermeidung von unerwünschten Materialdickstellen erreicht werden können, ohne dass der Haltering übermäßig breit ausgestaltet werden müsste.

Eine derart bemessene Ausdehnung wurde unter anderem deshalb gewählt, weil vermieden werden soll, dass der Haltering am Kunststoffvorformling noch bis in die Blasform hinein verläuft, zum Beispiel bis zu einer Länge von in der Summe mehr als zehn Millimetern (Dicke der Neckzentrierplatte plus Dicke des Halterings). Die Neckzentrierplatte kann nämlich ein standartisiertes und/oder normiertes wiederverwendbares Garniturenteil im Produktionsprozess sein, und wird beispielsweise standardmäßig mit den gleichen Abmaßen eingebaut und im Anschluss an die benötigte Geometrie der Kunststoffformlinge angepasst.

Gemäß zumindest einer Ausführungsform umfasst der Haltering zwei Halteklammerhälften, welche um einen Halsbereich unterhalb des Kragens des Kunststoffvorformlings mittels Haltemitteln spannbar sind, wobei im geschlossenen Zustand diese beiden Halteklammerhälften die Aufnahmekavität ausbilden. Beispielsweise kann es sich bei den Haltemitteln um federgespannte Greifer und/oder Verschluss- und Arretiermittel handeln. Im Anschluss an eine Schließbewegung wird die Blasform verschlossen und anschließend ein derartiger federgespannter Greifer angezogen. Nach dem Verschließen kann es, wie obig beschrieben, bei aus dem Stand der Technik beschriebenen Halteringen während des Blasformens zu Materialdickstellen und unerwünschten Durchmesserveränderungen, insbesondere im Halsbereich des Kunststoffvorformlings und später der fertig geblasenen Flasche, kommen. Mittels der hier beschriebenen Halteklammerhälften ist daher in besonders einfacher Art und Weise zum einen ein kostengünstiger Arretier- und Fixiermechanismus des Kunststoffvorformlings vor, während und nach dem Blasvorgang angeboten und gleichzeitig eine Aufnahmekavität in einer besonders kurzen Prozesszeit ausgebildet.

Gemäß zumindest einer Ausführungsform ist der Haltering in Form einer Neckzentrierplatte ausgeführt. "In Form einer Neckzentrierplatte" heißt in diesem Zusammenhang, dass der Haltering nicht zwangsläufig identisch mit einer Neckzentrierplatte sein muss, sondern lediglich maßgebliche Merkmale, das heißt insbesondere die plattenförmige Ausgestaltung des Halterings zu Zentrier- und/oder Fixierzwecken vorhanden sein können. Es kann jedoch auch sein, dass der Haltering tatsächlich eine Neckzentrierplatte ist.

Insbesondere ist denkbar, dass der Haltering in eine separate Neckzentrierplatte eingebracht ist. Die Neckzentrierplatte kann aus einem Stahl gebildet sein und mittels beispielsweise einem Kühlmittel (insbesondere Wasser) und einer dazugehörigen Kühlvorrichtung gekühlt werden.

Zudem ist denkbar, dass der Haltering in die Neckzentrierplatte oder sogar in die Blasform (beispielsweise mit einem Aluminium gebildet) integriert ist. Haltering und Blasform können dann einstückig miteinander ausgeführt sein oder auch fest zueinander, beispielsweise lösbar, montiert sein.Insbesondere wäre es auch denkbar, die sich in Längsrichtung des Kunststoffvorformlings und radial nach außen erweiternde konische Querschnittsfläche direkt in die Blasform zu integrieren. In diesem Fall könnte auf den Haltering verzichtet werden und trotzdem eine Materialdickstelle unterhalb des Abstützrings vermieden werden.

Gemäß zumindest einer Ausführungsform ist der Haltering an dem Kragen des Kunststoffvorformlings bündig anordenbar. "Bündig" heißt, dass zwischen dem Kragen des Kunststoffvorformlings und dem Haltering sich weder ein Spalt noch eine Unterbrechung ausbildet, welche ein Blasen erschwert oder die Gefahr eines nicht ausreichend festen Arretierens des Kunststoffvorformlings während des Ausblasens zumindest erhöht. Eine derartig bündige Ausgestaltung ist daher für ein besonders gleichmäßiges und stabiles Blasen der Kunststoffvorformlinge wünschenswert. Ein derartiges bündiges Anordnen wird zudem über die hier beschriebene, sich radial nach außen konisch verbreiternde, Aufnahmekavität deutlich erleichtert, da der Kunststoffformling aufgrund der konischen Ausgestaltung der Aufnahmekavität nach unten hin, beispielsweise in Richtung eines Blasformbodens, ausweichen möchte, und sich somit ein "bündiges Arretieren" insbesondere selbsttätig einstellen kann.

Es wird darüber hinaus eine Blasform zur Herstellung von Kunststoffbehältnissen angegeben. Dabei umfasst die Blasform zumindest einen Haltering, wie er in Verbindung mit einem oder mehreren der oben genannten Ausführungsformen beschrieben ist.

Das heißt die für den hier beschriebenen Haltering aufgeführten Merkmale sind auch für die hier beschriebene Blasform offenbart und umgekehrt. Dabei kann die beschriebene Blasform die gleichen Vorteile und Ausgestaltungen aufweisen, wie im Zusammenhang mit dem hier beschriebenen Haltering offenbart.

Weitere Vorteile und Ausführungsformen ergeben sich aus der beigefügten Zeichnung.

Darin zeigt:

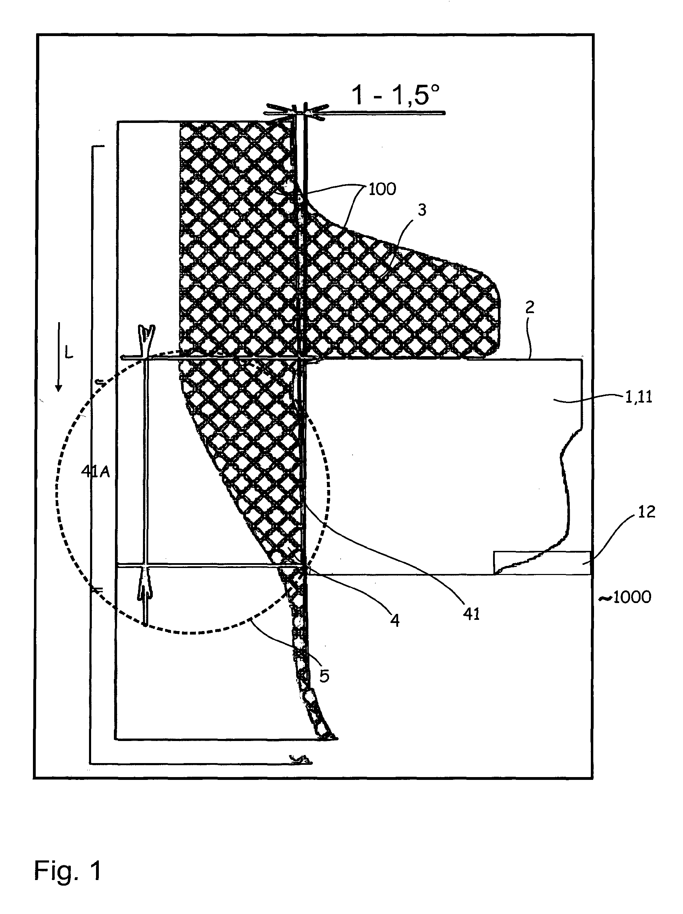

- Fig. 1: eine schematische Seitenansicht eines Ausführungsbeispiels eines hier beschriebenen Halterings als Element einer hier beschriebenen Blasform.

In dem Ausführungsbeispiel und der Figur sind gleich oder gleichwirkende Bestandteile jeweils mit den gleichen Bezugszeichen versehen. Die dargestellten Elemente nicht als maßstabsgerechte anzusehen, vielmehr können einzelne Elemente zum besseren Verständnis übertrieben groß dargestellt sein.

In der Fig. 1 ist anhand einer schematischen Seitenansicht ein Ausführungsbeispiel einer hier beschriebenen Blasform 1000 umfassend ein Ausführungsbeispiel eines hier beschriebenen Halterings 1 gezeigt. Der Haltering 1 für die Blasform 1000 zum Arretieren und Fixieren eines Kunststoffvorformlings 100 weist eine Abstützfläche 2 zum Abstützen eines Kragens 3 des Kunststoffvorformlings 100 sowie eine sich senkrecht zu einer Haupterstreckungsebene der Abstützfläche 2 erstreckende Aufnahmekavität 4 zum Aufnehmen eines Halsbereichs 5 des Kunststoffvorformlings 100 auf. Der Haltering 4 kann dabei ein von der Blasform 1000 separates Bauteil sein oder aber in die Blasform 1000 integriert ausgeführt sein. Dabei verbreitert sich die Aufnahmekavität 4 in ihrer Querschnittsfläche entlang einer Längsrichtung L des Kunststoffvorformlings 100 ausgehend von der Abstützfläche 2 radial nach außen hin durchgehend konisch. Mit anderen Worten verbreitert sich die Querschnittsfläche in der Längsrichtung L der Aufnahmekavität 4 stetig und gleichmäßig. Dabei ist in der Fig. 1 besonders deutlich entnehmbar, dass eine Neigung einer Innenfläche 41 der Aufnahmekavität 4 zu der Längsrichtung L wenigstens 0,5 und höchstens 5°, bevorzugt wenigstens 1 °und höchstens 4°, beispielsweise wenigstens 1 °und höchstens 1,5° beträgt. Es wurde nämlich die Erfahrung gemacht, dass beim Schließen des Halterings 1, welcher vorliegend durch zwei Halteklammerhälften 11 (die über Haltemitteln 12 zueinander befestigt sind) ausgebildet ist, jede Bewegung des Kunststoffvorformlings 100 oder der bereits fertig ausgeblasenen Flasche, welche während des Blasvorgangs in der Blasform 1000 (hervorgerufen beispielsweise durch Vibrationen, Übergaben, seitliche Kräfte durch Düsen) entsteht, dazu führen kann, dass die Flasche und/oder der Kunststoffvorformling 100 nach unten ausweichen möchte und sich somit sicher an die Blasform 1000 und beispielsweise den Haltering 1 insbesondere bündig auf der Abstützfläche 2 anlegt. Jede Übergabe in einen darauf folgenden "Obengreifer", beispielsweise Übergabestern, kann dann sicherer gelingen.

Zudem ist aus der Fig. 1 deutlich dargestellt, dass eine Projektion 41 A einer Ausdehnung der Innenfläche 41 der Aufnahmekavität 4 auf die Längsrichtung L höchstens 10 mm, bevorzugt höchstens 8 mm, und besonders bevorzugt höchstens 5 mm beträgt. Dabei ist in dem Ausführungsbeispiel der Haltering 1 in Form einer Neckzentrierplatte ausgebildet, wobei, was wiederum ebenso aus der Fig. 1 erkennbar ist, der Kragen 3 des Kunststoffvorformlings 100 bündig auf der Abstützfläche 2 zum Abstützen des Kragens 3 aufliegt.

Über die konische Verbreiterung ist sichergestellt, dass insbesondere eine sich nach und/oder während dem/s Ausformen/s abkühlende Flasche im Halsbereich 5 zwar beispielsweise an einem unteren Ende des Halsbereichs 5 stärker zusammenzieht als an einem oberen Ende, jedoch derart unterschiedliche Abkühleigenschaften schlechtestenfalls dazu führen, dass ein derartiger Halsbereich 5 in einer Seitenansicht zylindrisch ausgebildet ist. Im Idealfall jedoch ist mittels der "konisch" ausgebildeten Aufnahmekavität 4 gewährleistet, dass die aus dem Kunststoffvorformling 100 hergestellte Flasche auch nach dem Abkühlen in ihrem Querschnitt immer noch durch den Haltering 1 aufgrund des konisch nach außen verlaufenden Flaschenhalses stabiler und besser handhabbar ist, da Berührungspunkte des Halterings 1 in Verbindung mit dem konischen sich nach außen verbreiternden Flaschenhals zu einem Ausweichen der Flasche und/oder des Kunststoffformlings 100 in Längsrichtung nach unten führt, wodurch mittels einer derartig "konischen" Ausbildung des Flaschenhalses der Kunststoffvorformling 100 und/oder die Flasche automatisch in die Blasform 1000 oder eine sonstige Halteeinrichtung hineingepresst wird.

Darüber hinaus ermöglicht eine derartig konische Ausbildung der Aufnahmekavität 4, beispielsweise an der Blasform 1000, eine Erweiterung eines Prozessfensters beispielsweise in zeitlicher Hinsicht, beim Bilden einer Flasche in der Weise, dass während des Blasvorgangs mehr Material aus dem Hals und insbesondere aus dem Bereich des Halsbereichs 5 gezogen werden kann. Darüber hinaus wird durch dieses "erleichterte Ausziehen" des Kunststoffvorformlings 100, welcher beispielsweise mit einem PET-Material gebildet ist, im Halsbereich 5 eine Verbesserung beim Befüllen, das heißt eine Erleichterung und eine Prozesszeitverkürzung, ermöglicht.

Die Erfindung ist nicht durch die Beschreibung anhand der Ausführungsbeispiele beschränkt, vielmehr umfasst die Erfindung jedes neue Merkmal sowie die Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder den Ausführungsbeispielen angegeben ist.

### Bezugszeichenliste

- 1: Haltering
- 2: Abstützfläche
- 3: Kragen
- 4: Aufnahmekavität
- 5: Projektion
- 11: Halteklammerhälften
- 41: Innenfläche
- 41A: Projektion der Innenfläche auf die Längsrichtung L
- 100: Kunststoffvorformling
- 1000: Blasform
- L: Längsrichtung

## Patentansprüche

1. Haltering (1) für eine Blasform zum Arretieren und/oder Fixieren eines Kunststoffvorformlings (100), mit einer Abstützfläche (2) zum Abstützen eines Kragens (3) des Kunststoffvorformlings (100) und einer sich senkrecht zu einer Haupterstreckungsebene der Abstützfläche (2) erstreckende Aufnahmekavität (4) zum Aufnehmen eines Halsbereichs (5) des Kunststoffvorformlings (100),
**dadurch gekennzeichnet, dass**
die Aufnahmekavität (4) sich in ihrer Querschnittsfläche entlang einer Längsrichtung (L) des Kunststoffvorformlings (100) ausgehend von der Abstützfläche (2) radial nach außen hin zumindest stellenweise konisch verbreitert.

2. Haltering (1) nach Anspruch 1,
**dadurch gekennzeichnet, dass**
eine Neigung einer Innenfläche (41) der Aufnahmekavität (4) zu der Längsrichtung (L) wenigstens 0,5° und höchstens 10°, bevorzugt wenigstens 1 °und höchstens 6°, und besonders bevorzugt zwischen 1° und 3° beträgt.

3. Haltering (1) nach Anspruch 1 oder 2,
**dadurch gekennzeichnet, dass**
eine Projektion (41 A) einer Ausdehnung einer Innenfläche (41) der Aufnahmekavität (4) auf die Längsrichtung (L) höchstens 10 mm, bevorzugt höchstens 8 mm, und besonders bevorzugt höchstens 6 mm beträgt.

4. Haltering (1) nach zumindest einem der vorhergehenden Ansprüche,
**gekennzeichnet, durch**
zwei Halteklammerhälften (11), welche um einen Halsbereich (6) unterhalb des Kragens (3) des Kunststoffvorformlings (100) mittels Haltemitteln (12) spannbar sind, wobei im geschlossenen Zustand diese beiden Halteklammerhälften (11) die Aufnahmekavität (4) ausbilden.

5. Haltering (1) nach zumindest einem der vorhergehenden Ansprüche,
**dadurch gekennzeichnet, dass**
dieser in Form einer Neckzentrierplatte ausgeführt ist.

6. Haltering (1) nach zumindest einem der vorhergehenden Ansprüche,
**dadurch gekennzeichnet, dass**
dieser an dem Kragen (3) des Kunststoffvorformlings (100) bündig anordenbar ist.

7. Blasform (1000) zur Herstellung von Kunststoffbehältnissen,
**gekennzeichnet, durch**
zumindest einen Haltering (1) gemäß zumindest einer der vorhergehenden Ausführungsformen.
